# EUROPEAN PATENT APPLICATION

(11) **EP 1 122 730 A1**
(43) Date of publication of application: **08.08.2001**
(21) Application number: 01300608.5
(22) Date of filing: 24.01.2001
(51) Int. Cl.: G11B 23/023

(54) **Injection moulded video box**

(30) Priority: 07.02.2000 GB 0002734
(71) Applicant: Buena Vista Home Entertainment Limited, London W6 9PE (GB)
(72) Inventor: Fraser, Anthony Henry Joseph, Corby, Northants NN17 3AB (GB); Farrar, Peter, Ilkley, Leeds LS29 7LY (GB)
(74) Representative: Unwin, Stephen Geoffrey

(57) **Abstract**

An injection moulded video box comprising a front face (1), rear face (2), top and bottom faces (3,4), spine face (5) and an openable face (6), all but the spine face (5) comprising flat areas so that the box can be stably stood on of those faces and at least some of the edges (1B, 1C, 1D, 2A, 2B, 2C) of the box between these faces being chamfered so as to be comfortable to hold. The openable face (6) has a flat engagement area (6C,6D) towards each end thereof for engagement by an automatic opening and closing mechanism, and catches (7A,7B) aligned with the engagement areas. The openable face (6) has a recessed area (6E) with curved side walls (6L,6M) for receiving a user's fingers or thumbs, the flat areas (6C,6D) and side walls (6L,6M), together providing co-planar points on which the box can be stably stood on its openable face (6). The box has two openable halves joined by a spine portion (5), one of the halves having locating members (9B, 12B, 13B) for locating a video cassette therein, the locating members (9B, 12B, 13B) being shaped so as to guide a video box towards the correct location. The height of the box is preferably greater than 202 mm but less than 210 mm and the width of the box greater than 118 mm but less than 130 mm.

## Description

This invention relates to an injection moulded video box.

There are variety of injection moulded video boxes available all having slightly different features. The present invention aims to improve upon existing video boxes by making it of a design which is compatible for use with automatic opening, loading and closing machinery, yet which is both easy for the user to handle and has a pleasing appearance.

According to a first aspect of the invention, there is provided an injection moulded video box comprising a front face, a rear face, top and bottom faces, a spine face and an openable face, the front and rear faces, bottom face, spine face and openable face each comprising a substantially flat area or areas and being arranged so that the box can be stably stood on at least some of these faces. The edges of the box, preferably between both the front face and the rear face and the top, bottom and openable face are chamfered so as to be comfortable for a user to hold.

According to a second aspect of the invention, there is provided an injection moulded video box comprising a front face, a rear face, top and bottom faces, a spine face and an openable face, the openable face comprising a substantially flat engagement area towards each end thereof having opposed edges for engagement by an automatic opening and closing mechanism, the box being provided with catches for releasably holding the box in a closed configuration, the catches being aligned with the said engagement areas so as to minimise distortion of the box when opened or closed by the automatic opening and closing mechanism.

According to a third aspect of the invention, there is provided an injection moulded video box having an openable face which comprises substantially flat areas at opposite ends of the face and a recessed area for receiving a user's fingers or thumbs between said substantially flat areas, side walls of the recessed area adjacent the front and rear faces having a curved shape and the said substantially flat areas together with the side walls providing at least four co planar points on which the box can be stably stood on its openable face.

According to another aspect of the invention, there is provided an injection moulded video box having two openable halves joined by a spine portion, at least one of the halves being provided with locating members for locating a video cassette therein, the locating members being shaped so as to guide a video cassette towards the correct location if it is initially presented slightly out of alignment with said location.

The locating members preferably have at least one sloping edge or side to guide a mis-aligned cassette into the correct location.

Preferably, the other of the halves is provided with members positioned so as to be aligned with said locating members when the box is closed so that the members on the two halves co-operate to increase the rigidity of the box when in the closed configuration.

According to yet another aspect of the invention, there is provided an injection moulded video box comprising a front face, a rear face, top and bottom faces, a spine face and an openable face, each of the faces comprising a substantially flat area or areas and the edges of the box between at least one of the front face and the rear face and one or more of the top, bottom and openable face being chamfered so as to be comfortable for a user to hold .

According to a further aspect of the invention, there is provided an injection moulded video box comprising a front face, a rear face, top and bottom faces, a spine face and an openable face, the height of box being defined by the distance between the top and bottom faces, the width of the box being defined by the distance between the spine and openable faces and the depth of the box being defined by the distance between the front and rear faces, the height of the box being greater than 202 mm but less that 210 mm and the width of the box being greater than 118 mm and less that 130 mm.

Preferably, the height of the box is in the range 202-205 mm and the width of the box is greater than 125 mm.

Other features of the invention will be apparent from the following description and from the subsidiary claims of the specification.

The invention will now be further described, merely by way of example, with reference to the accompanying drawings, in which :
Figure 1 is a perspective view from the opening end of an embodiment of a video box according to the invention;
Figure 2 is a perspective view from the spine end of the video box shown in Figure 1;
Figure 3, 4, 5, 6 and 7 are views of the top face, spine face, front face (part cutaway), openable face and bottom face (part cutaway), respectively, of the video box shown in Figures 1 and 2;
Figure 8 is a plan view of the interior of the box when in an open position;
Figure 9 is a section taken on line A-A of Figure 8;
Figure 10 is a section taken in line B-B of Figure 8;
Figure 11 is a section taken on line C-C of Figure 8;
Figure 12 is a detailed section taken on line D-D of Figure 8.
Figure 13 is a section taken on line B-B with the box in a closed configuration;
Figure 14 is a detail section on line B-B of Figure 8 with the box in a closed configuration;
Figure 15 is a detailed section of a portion of the view on line C-C of Figure 8 with the box in an open configuration. This view is a detail of the right hand portion of Figure 11;
Figure 16 is a side view of boxes according to an embodiment of the invention on shelves comprising rails and shows a narrower conventional box; and
Figure 17 is a front view of boxes according to an embodiment of the invention on conventional shelves and shows shorter conventional boxes.

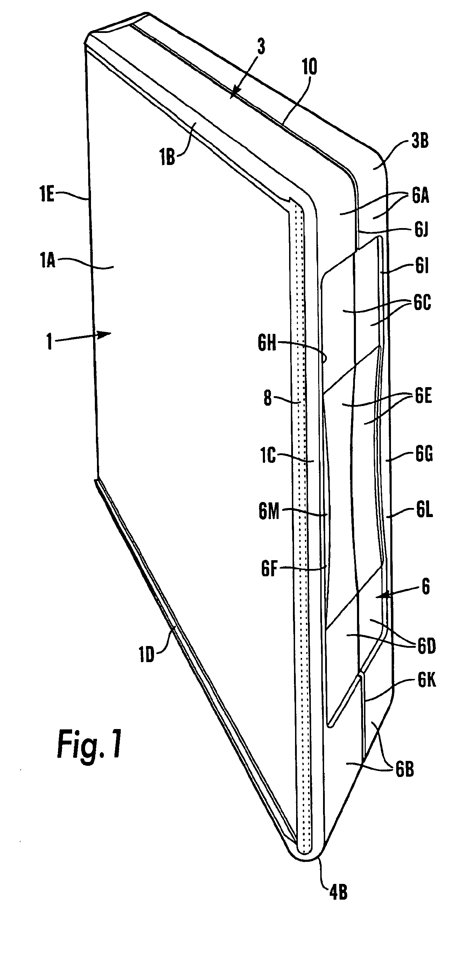

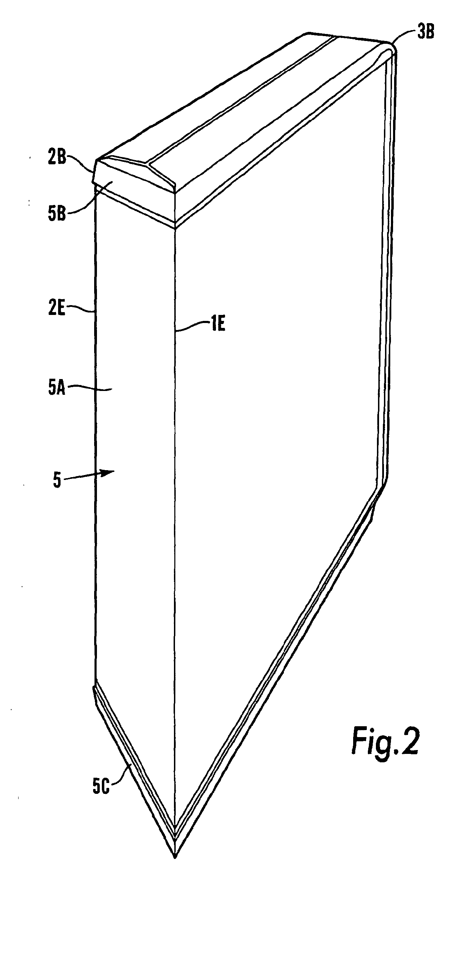

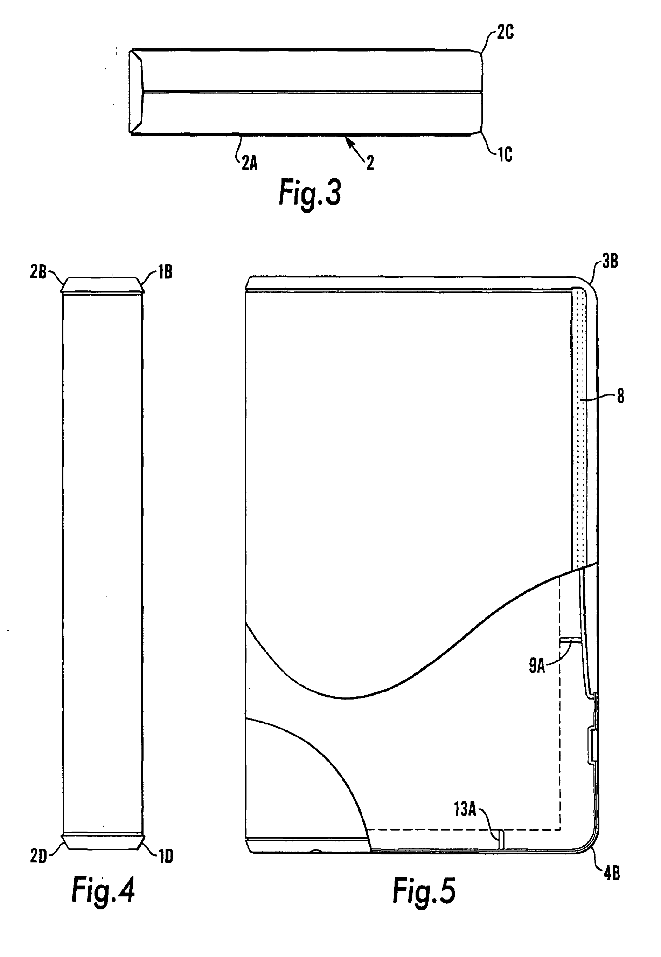

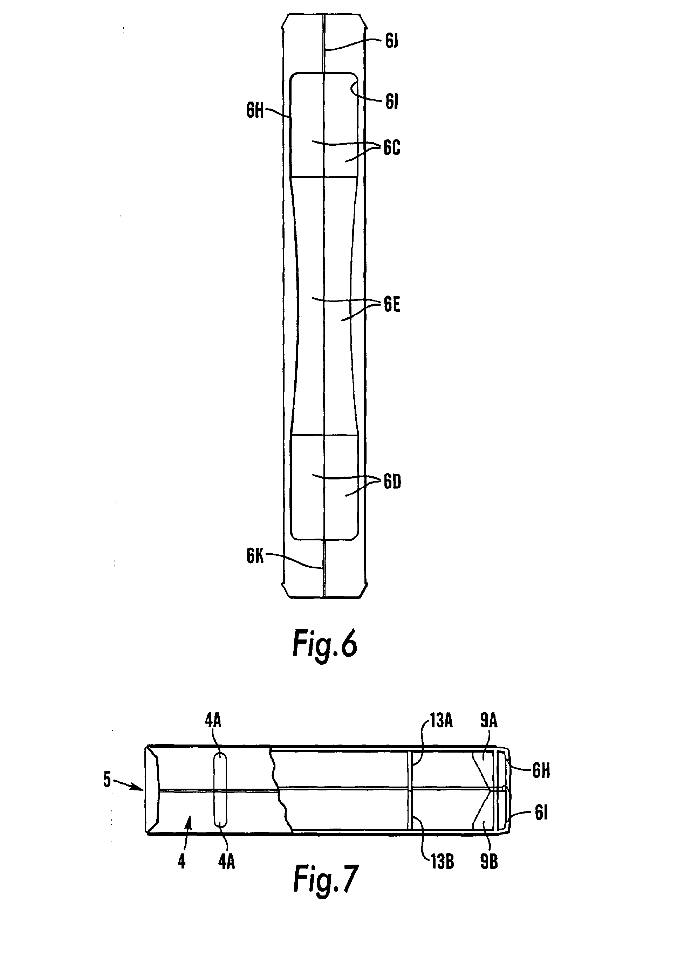

As shown in Figures 1 -7, each face of the video box comprises one or more substantially flat areas. The front face 1 comprises a flat area 1A which extends across the whole face apart from the edges thereof. The rear face 2 is similar (see Figure 3). The bottom face 4 comprises a pair of flat areas 4A (only one of which is shown in Figure 7) which extend across the depth of the box. The spine face 5 comprises a flat face 5A which extends across the whole of the face apart from the top and bottom edges thereof. The openable face 6 comprises a pair of flat areas 6A at one end and a pair of flat areas 6B at the other end thereof. Adjacent these flat areas, further, recessed, flat engagement areas 6C, CD are provided and between these is a sculpted recess 6E. The recess 6E has side walls 6F,6G which join the two flat areas 6A, 6B. The flat areas 6A,6B and the side walls 6F,6G together provide at least four coplanar points on which the box can be stably stood on its openable face.
The faces within each pair 6A,6B are typically inclined to each other by 1-1.5 degrees to assist in the withdrawal of the box from the injection moulding tool. The side walls 6F,6G are curved on the sides facing each other across the recess 6E (as shown in Figures 1 and 6). The side walls 6F,6G are also slightly curved in the direction perpendicular to the face 6 although this is not discernible from the drawings as the radius of curvature is large. The centre points along each of the side walls thus project out from the face 6 slightly further than the ends thereof. In a preferred arrangement, the lines 6J,6K between the pairs of faces 6A and 6B and the midpoints 6L,6H of the side walls 6F,6G are coplanar so that the box can be stably stood on its opening surface with the lines 6J,6K and points 6L,6M resting on the supporting surface.

The top and bottom faces 3,4 also each comprise two halves which are substantially flat but slope relative to each other by about 1-1.5 degrees. to enable the box to be withdrawn from the injection moulding tool. As indicated above, the bottom face is provided with feet 4A which provide flat areas on which the box can be stood. If it is desired to be able to stand the box on the top face, similar feet (not shown) could be provided on this face.

Five faces of the box, namely the front face, rear face 2, bottom face 4, spine face 5 and openable face 6, are thus arranged so as to enable the box to be stood stably on any of these faces. This increases the ease with which the box can be handled both by automatic machinery and by an end user. Known video boxes have flat front and rear faces and are designed to stand on the bottom face but the spine faces and/or the openable face are usually curved so the box cannot be stood on one or more of these faces.

As shown in Figures 1-7, the edges 1B, 1C, 1D between the front face 1 and the top, bottom and openable faces 3, 4, 6 are chamfered so as to be comfortable for a user to hold. Preferably the chamfers 1B, 1C, 1D are relatively large, e.g. extend in the order of 5 mm away or more from the adjacent face. This does not reduce the width of any of the flat areas of the faces to an extent which significantly reduces the stability with which the box can be stood on that face but it significantly reduces the general rectilinear appearance the box would otherwise have due to the fact that all of its faces are generally planar.

The corresponding edges 2B, 2C, 2D between the rear face 2 and the top, bottom and opening faces 3, 4, 6 are similarly chamfered.

In other arrangements, only some of the edges referred to above are chamfered.

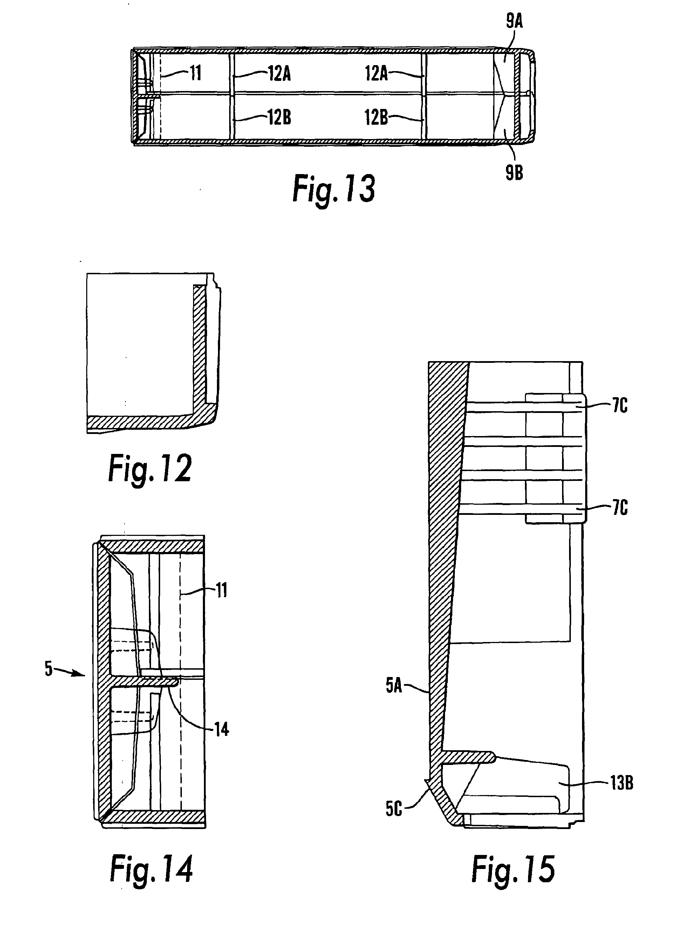

The edges 5B,5C between the spine face 5 and the top and bottom faces 3,4 are similarly chamfered but the edges of the chamfers facing the spine face 5 project out about 0.5 mm beyond the plane of the flat face 5A (see figure 15). This small overhang protects the edge of a plastics sleeve (described below) when it passes across the spine face 5.

The edges 1 E, 2E between the front and rear faces 1, 2 and the spine face are not chamfered as the front and rear faces 1,2 and the spine face 5 are hingedly connected about these edges and it is desirable for the hinges to be formed by relatively narrow lines between the faces so the positions of the hinge lines are well defined.

The edges 3B and 4B between the top and bottom faces 3 and 5 and the opening face 6 are preferably curved, with a radius of curvature in the range of 5 - 10 mm and preferably around 8 mm.

The engagement areas 6C, 6D on the openable face 6 have opposed edges comprising side walls 6H,6I which are substantially perpendicular to the areas 6C,6D and have a height, in the direction perpendicular to the areas 6C,6D, in the range 1-2.5 mm and preferably around 1.5 mm. These side walls 6H,6I are provided for engagement by the jaws of an automatic opening and closing mechanism, e.g. as used to open a box for insertion of a video cassette therein and subsequent closing of the box. The side walls 6H, 6I are preferably spaced from each other by at least 20 mm, and preferably 24 mm.

The areas 6C, 6D are preferably flat so as not to impede access of the jaws to the side walls 6H,61 but may be decorated with the manufacturers logo, which may be embossed therein or otherwise formed by removal of material from the area or by the application of an adhesive label.

The video box is provided with catches comprising components 7A, 7B on the respective halves of the box which inter-engage when the box is closed so as to releaseably hold the box in the closed configuration. The catches are aligned with the respective engagement areas 6C,6D so as to minimise distortion of the box when opened or closed by an automatic opening and closing mechanism. The components 7A also preferably have angular features such as ribs 7C (see Figure 15) which extend perpendicular to the face 1A and which can be gripped by automatic handling machinery.

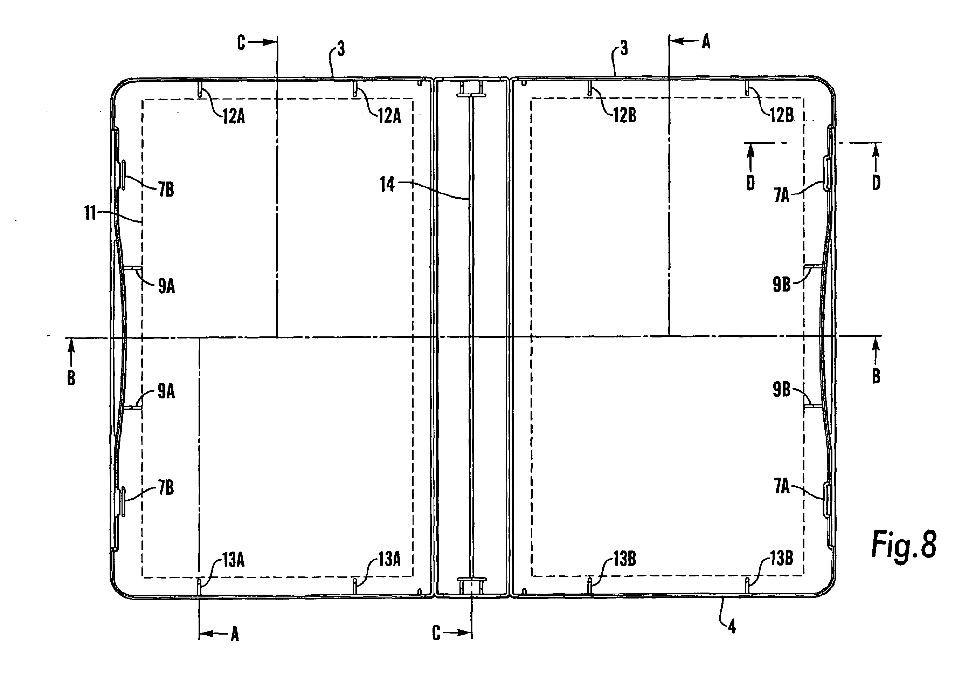

The sculpted recess 6E has a curved profile as shown in Figure 8 and the side walls 6F,6G thereof have a curved shape on the sides facing the recess 6E, as mentioned above The curved sides of the walls 6F,6G are for engagement by a user's fingers or thumbs and their shape thus makes them ergonomic and comfortable to touch. The sculpted recessed 6E enables the users fingers and thumbs to engage the curved sides of the walls 6F,6G and obtain a purchase thereon to enable the user to apply forces to the two halves of the box so as to open the box. The central portion of the recess 6E preferably has a depth of at least 5 mm.
As in known video boxes, a clear plastics sleeve is welded adjacent the edges 1C and 2C of the front and rear faces and extends across the font face 1 around the spine face 5 and across the rear face 2. The weld lines 8 are shown by dotted lines in Figures 1 and 5. However, due to the chamfered edges 1C, 2C the weld lines are set back from the edges of the box, i.e. the plane of the faces 6A,6B, by a distance of 5 or 6 mm. To prevent the box being distorted or crushed by the pressure applied thereto by the welding heads of a welding machine when the sleeve is affixed, the interior of the box is preferably provided with members 9A,9B within each half of the box which engage when the box is closed, so as to increase the strength and rigidity of the box as shown in Figures 7 and 13.

It will also be seen from the Figures that the two halves of the video box are approximately of the same depth, i.e. the dividing line 10 is equally spaced from the front and rear faces 1, 2 although the side walls of one half of the box are approximately 1.5 mm taller that the side walls of the other half so there is a 1.5 mm interlock or overlap between the side walls when in the closed position. It is advantageous to make the two halves of the box of similar dimensions and, indeed, as symmetrical as possible, as this helps ensure even flow of the plastics material from which they are formed during the injection moulding process. If flows to the two halves are different, this can lead to different parts having a different density and during cooling this can lead to distortion and warpage.

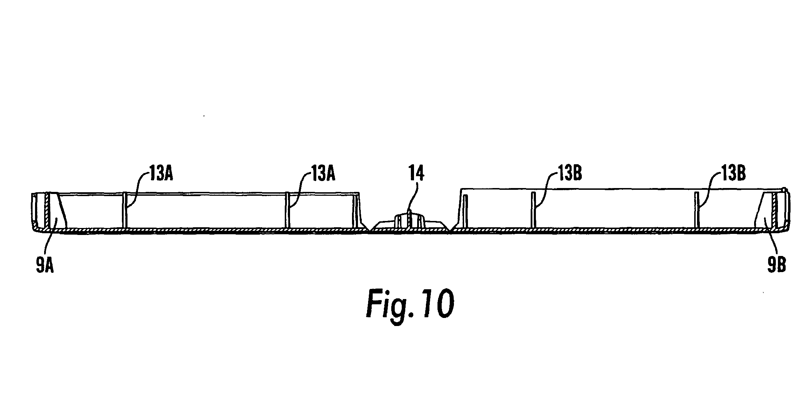

Figures 8-15 show internal features of the video box. The position in which a video cassette should be located in the box relative to the sides thereof is shown by dashed lines 11.

As shown in Figure 8, locating members 9A, 9B are provided adjacent the opening edge of the box to locate a video cassette in the direction perpendicular to the opening face 6. Locating members 12A, 12B are provided adjacent the top edge of the box and locating members 13A, 13B are provided adjacent the bottom edge of the box. These latter two sets of members locate the video cassette in the direction perpendicular to the top and bottom faces 3,4.

The locating members 9B, 12B and 13B in at least one half of the box are shaped so as to guide a video cassette (not shown) towards the correct location, i.e. the location indicated by dashed lines 11, if it is initially presented slightly out of alignment (either by an automatic packing machine or by an end user) with this location. Preferably, the locating members each have at least one sloping edge, (as shown in Figures 7, 9, 10, and 11) to lead a mis-aligned cassette into the correct location.

As will be appreciated from the Figures, if the cassette is slightly mis-aligned, it will engage the outer end of the sloping edges of the locating members on one or two sides of the cassette and these sloping edges help guide the cassette towards the correct location as the cassette is moved further towards the internal side of the rear face of the box.

The corresponding locating members 9A, 12A, 13A, on the other half of the box are preferably similar so the video cassette can be placed into either half of the box. Also, this helps make the two halves of the box as symmetrical as possible.

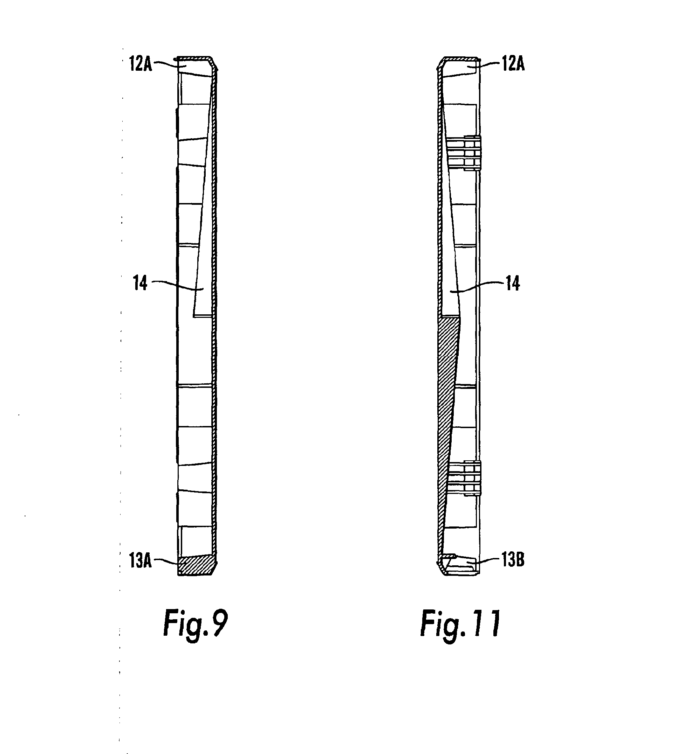

Preferably, no locating members are provided adjacent the spine edge of the box so an automatic packing machine can present the video cassette from the direction of the spine without movement of the cassette towards the members 9B being impeded. However, the internal surface of the spine is preferably provided with a projection 14 (see Figures 9, 10, 13 and 14) which, when the box is moved to the closed configuration, engages the edge of the cassette adjacent the spine to push it into the correct location in the direction towards the openable face 6. The projection 14 also restricts movement of the cassette towards the spine face 5 so when the box is closed the cassette cannot slide about within the box (although a small movement of up to 0.5 mm may be permitted.)

The locating members 9A, 9B, 12A, 12B, 13A, 13B, also act as bracing members as the corresponding members in the two halves of the box are arranged to co-operate so as to increase the rigidity of the box when in the closed configuration. The corresponding locating members are aligned with each other when the box is closed and engage each other or almost engage each other. The various co-operating pairs of members thus increase the rigidity of the box in the direction perpendicular to the front and rear faces 1, 2 and help maintain the box in an undistorted configuration. This is particularly important to ensure the boxes are self-supporting and can withstand considerable pressure when stacked in piles (which may comprise 50 or 100 boxes or more), otherwise the boxes towards the bottom of the pile may be squashed or distorted due to the crushing force of the weight of the pile or of machinery used to package such a pile of boxes. Also, as indicated above, the members 9A 9B adjacent the openable face 6 of the box help resist the pressure applied to the box when a sleeve is welded thereto.

As shown in the figures, the locating members 9A, 9B, 12A, 12B, 13A, 13B preferably project from the inner surface of the face 1 but are also preferably connected to the internal surface of the adjacent face, i.e. the opening face and top and bottom face, so they are connected across the angle between adjacent faces of the box. The members thus also serve to hold these faces perpendicular to each other and so help prevent faces of the box from splaying or bowing out.

As shown in Figure 8, two locating members are provided adjacent each edge of the box (except the spine edge) and are spaced apart from each other along that edge and from the faces at the opposite ends of the edge. This ensures that each edge is braced at four points, i.e. at the ends by the side walls of the box and at intermediate points by the locating members. More locating members may be provided on one or more of the edges or, in some circumstances, just one locating member on one or more of the edges may be sufficient. In some cases, it may also be sufficient to provide a locating member or members on only one or two edges of the box.

It will be appreciated that the provision of locating members on three sides of the box has a tendency to increase the height and width of the box, particularly when the locating members are provided with sloping edges to guide a video cassette towards the current location and when locating members are provided adjacent a sculpted or recessed part 6E of the opening face. In addition, it is desirable not to reduce the display area of a printed sheet held between the sleeve and the box despite the fact the area is reduced by 5 mm at the top, bottom and opening edges due to the chamfers 1B, 1C, 1D described above so, again, there is a tendency to increase the height and/or the width of the box to make up for the areas lost due to the chamfers.

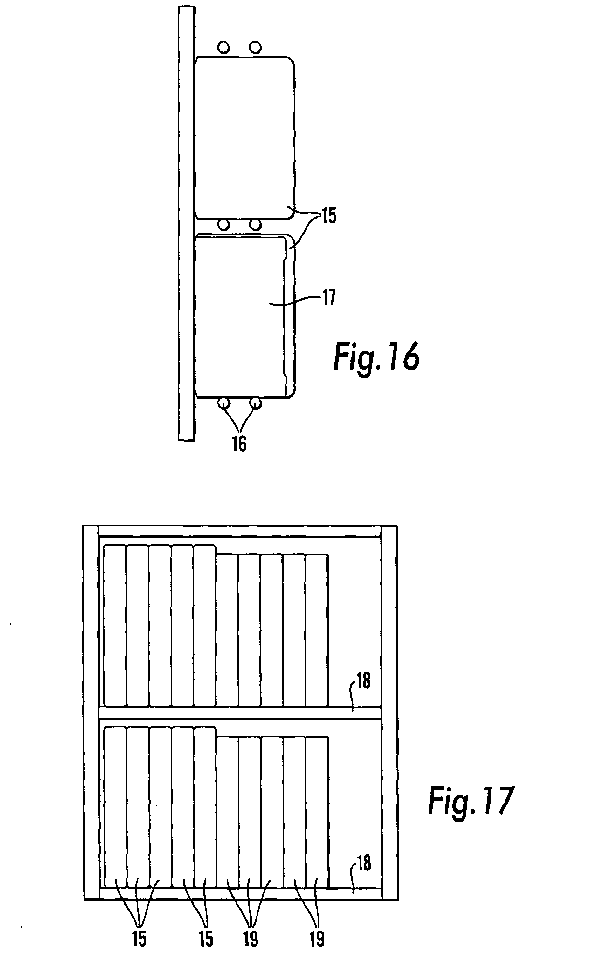

However, there are limits on how much the height and width of the box can be increased. Many sales outlets use standardised shelving for holding video boxes so the height of the box must not be too big to fit within such shelving. Furthermore, some forms of shelving comprise pairs of narrow rails on which the video boxes are supported as shown in Figure 16. If the width of the box if increased too much, the stability of the boxes on such rails may be reduced as they may have an increased tendency to tip forwards off the rails . It is also not desirable for the width of the box to project out beyond the extent of the shelves themselves as this would be unsightly and there is a risk the boxes may catch on a passer by.

Bearing in mind all these factors, a particular set of dimensions has been found to be advantageous. If the height of the video box is greater than 202 mm but less than 210 mm the boxes are at least as tall as the majority of the boxes presently on the market but should still fit within the majority of the standard shelves used at sales outlets and if the width is greater than 118 mm and less than 130 mm, the boxes are at least as wide as the majority of the boxes presently on the market but should not project beyond the majority of standard shelves used at sales outlets.

Boxes with such dimensions have the additional advantage of being larger than nearly all existing boxes on the market, i.e. their height is greater and/or their width is greater than other boxes. This means that the boxes literally stand out relative to conventional boxes placed on the same shelves. This aids selection by a user and is a useful point-of-sale marketing feature.

Preferably, the height of the video box is in the range of 202 to 205 mm and the width greater than 125 mm. With such dimensions, the video boxes should fit within the majority of standard shelving with only a small clearance between the top face of the box and the underside of the shelf above. Thus, if the box tips forward due to its unusually large width, the top surface of the box will engage the underside of the shelf above so the box is prevented from tipping further.

Preferred dimensions of the box are shown in the accompanying drawings, the main dimensions being listed below:
Height of box: 204 mm
Width of Box: 125 to 125.5 mm
Depth of box: 30 mm (which is similar to the depth of most known boxes)

Boxes of such dimensions have a height approximately 10 mm greater than that of one well known form of box and a width approximately 10 mm greater than that of another well known form of box.

Figure 16 shows a box 15 of the type described above on shelves comprising a pair of rails 16. The figure also shows a narrower conventional box 17.

Figure 17 shows boxes 15 of the type described above on conventional shelves 18 as well as shorter conventional boxes 19.

The video box described above thus has five faces which are arranged so the box can be stood thereon so making the box much easier for handling by automatic machinery but, nevertheless, is shaped to have a pleasing appearance and to be easy for an end user to handle. In particular, the provision of angular edges and thin edges or lips is avoided. Other specific features are also provided to facilitate handling by automatic opening, packing and closing machinery, to help locate a video cassette in the correct location with the box and to ensure the box is strong enough to withstand the forces applied to it by such machinery. These features also impinge upon the dimensions of the box and specific dimensions are selected in view of this. Whilst the dimensions are selected on the basis of these technical features, and in relation to known shelving, the range of dimensions has the additional advantage of uniquely identifying the box from others on the market.

## Claims

1. An injection moulded video box comprising a front face, a rear face, top and bottom faces, a spine face and an openable face, the front and rear faces, bottom face, spine face and openable face each comprising a substantially flat area or areas and being arranged so that the box can be stably stood on at least some of these faces.

2. An injection moulded video box as claimed in claim 1 in which the edges of the box between both the front face and the rear face and the top, bottom and openable face are chamfered so as to be comfortable for a user to hold.

3. An injection moulded video box as claimed in claim 1 or 2 in which the chamfers are of a size which reduces the dimensions of the adjacent faces by approximately 5 mm or more.

4. An injection moulded video box as claimed in claim 1, 2 or 3 in which the edges between the top and bottom faces and the opening face are curved, with a radius of curvature in the range 5-10 mm and preferably around 8 mm.

5. An injection moulded video box comprising a front face, a rear face, top and bottom faces, a spine face and an openable face, the openable face comprising a substantially flat engagement area towards each end thereof having opposed edges for engagement by an automatic opening and closing mechanism, the box being provided with catches for releasably holding the box in a closed configuration, the catches being aligned with the said engagement areas so as to minimise distortion of the box when opened or closed by the automatic opening and closing mechanism.

6. An injection moulded video box as claimed in claim 5 in which the opposed edges of the engagement area are spaced from each other by at least 20 mm, and preferably around 24 mm.

7. An injection moulded video box having an openable face which comprises substantially flat areas at opposite ends of the face and a recessed area for receiving a user's fingers or thumbs between said substantially flat areas, side walls of the recessed area adjacent the front and rear faces having a curved shape and the said substantially flat areas together with the side walls providing at least four co planar points on which the box can be stably stood on its openable face.

8. An injection moulded video box having two openable halves joined by a spine portion, at least one of the halves being provided with locating members for locating a video cassette therein, the locating members being shaped so as to guide a video box towards the correct location if it is initially presented slightly out of alignment with said location.

9. An injection moulded video box as claimed in claim 8 in which the locating members each have at least one sloping edge or side to guide a mis-aligned cassette into the correct location.

10. An injection moulded video box as claimed in claim 8 or 9 in which two locating members are provided for locating each of one, two or three sides of the cassette, the two locating members on each side being spaced from each other and from the faces at the opposite ends of that side of the box.

11. An injection moulded video box as claimed in claim 8, 9 or 10 in which the other of the halves is provided with members positioned so as to be aligned with said locating members when the box is closed so that the projections on the two halves co-operate to increase the rigidity of the box when in the closed configuration.

12. An injection moulded box as claimed in claim 8, 9, 10 or 11 in which one or more of the locating members is connected across the angle between adjacent faces of the box so as to help maintain those faces perpendicular to each other.

13. An injection moulded video box as claimed in claims 8, 9, 10, 11 or 12 in which at least some of said locating members are located in an area of the box which, in use, is subjected to pressure from a welding head used to weld a sleeve to the exterior of the box.

14. An injection moulded video box comprising a front face, a rear face, top and bottom faces, a spine face and an openable face, each of the faces comprising a substantially flat area or areas and the edges of the box between at least one of the front face and the rear face and one or more of the top, bottom and openable face being chamfered so as to be comfortable for a user to hold.

15. An injection moulded video box comprising a front face, a rear face, top and bottom faces, a spine face and an openable face, the height of box being defined by the distance between the top and bottom faces, the width of the box being defined by the distance between the spine and openable faces and the depth of the box being defined by the distance between the front and rear faces, the height of the box being greater than 202 mm but less that 210 mm and the width of the box being greater than 118 mm and less that 130 mm.

16. An injection moulded video box as claimed in claim 15 in which the height of the box is in the range 202-205 mm and the width of the box is greater than 125 mm.
